Europäisches Patentamt

**European Patent Office**

Office européen des brevets

(19)

(11) Publication number: **0 104 131**
**A1**

(12) # EUROPEAN PATENT APPLICATION

(21) Application number: **83630128.3**

(22) Date of filing: **16.08.83**

(51) Int. Cl.³: **C 08 L 67/02**

(30) Priority: **18.08.82 US 409220**

(43) Date of publication of application:
**28.03.84 Bulletin 84/13**

(84) Designated Contracting States:
**DE FR GB IT**

(71) Applicant: **THE GOODYEAR TIRE & RUBBER COMPANY**
**1144 East Market Street**
**Akron, Ohio 44316(US)**

(72) Inventor: **Gartland, Robert John**
**141 South Yorkshire**
**Youngstown Ohio 44515(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) **Injection molding and partial crystallization of a polyester/polyolefin blend in a heated mold.**

(57) A process for making an injection molded article comprising injection molding a molten composition into a mold wherein said mold is a temperature of from 134°C. to 168°C., wherein the molten composition has distributed therein from .5 to 10% by weight of a finely divided polyolefin produced from olefin monomers having 2 to 6 carbon atoms and 99.5 to 90% by weight of polyethylene terephthalate is described. A molded article which is produced by the process of the present invention is also described.

EP 0 104 131 A1

1

# INJECTION MOLDING AND PARTIAL CRYSTALLIZATION OF A POLYESTER/ POLYOLEFIN BLEND IN A HEATED MOLD

## Background of the Invention

This invention relates to a process for making an injection molded article from a polyester-polyolefin blend. More specifically, this invention describes an injection molding process for making a partially crystalline article from a homogeneous blend of high molecular weight polyethylene terephthalate and a polyolefin wherein the mold is at a temperature from 134°C. to 168°C.

In injection molding, when polyester (PET) melt is suddenly chilled in a cold mold, transparent amorphous parts are obtained, however, when these parts are heated to a temperature range above 80°C (the softening temperature, or Tg glass transition temperature) they show severe distortion, considerable shrinkage, and whitening caused by relaxation of built in stresses prior to crystallization (formation of an ordered morphological structure).

## Background Art

U.S. Patent 3,361,848 discloses injection molding a polyester-polyolefin blend. This patent discloses the injection molding of polyesters of aromatic dicarboxylic acids and saturated diols such as the polyester of terephthalic acid and ethylene glycol. The injected resin contains the aromatic dicarboxylic acid and a saturated diol along with finely distributed high molecular weight polyolefins of 3 to 6 carbon atom mono-olefins in an amount of up to 10 percent by weight. The patent discloses that after injection molding the polyolefin-containing polyester into a

2

three dimensional article of predetermined shape or configuration, the molded article can be heat set at a temperature of at least about the second order (glass) transition point of the polyester.

U.S. Patent 3,405,198 discloses a process for making impact resistant injection molded polyethylene terephthalate products. This process uses a polyester which comprises polyethylene terephthalate and from .5 to 50 percent by weight of polyethylene. This patent teaches that it is desirable to heat set the injection molded product by subjecting it to an elevated temperature above 100°, i.e., at a temperature above the second order transition point of the polyester.

One known method employed to improve the processing characteristics of polyethylene terephthalate consists in working with very hot molds, i.e., 140°C. The disadvantage of using hot molds in processing the molten composition is the sticking of the composition to the mold and distortion upon demolding.

Summary of the Invention

Disclosed is a process for making a partially crystalline injection molded article comprising injection molding a molten composition into a mold wherein said mold is at a temperature of from 134°C. to 168°C., wherein said molten composition has distributed therein from .5 to 10 percent by weight of a finely divided polyolefin produced from olefin monomers having two to six carbon atoms and 99.5 percent to 90 percent by weight of polyethylene terephthalate.

This invention also relates to polyester articles which are suitable for use at service temperatures near 200°C.

## Brief Description of the Drawings

The invention is further illustrated by the accompanying drawings:

Figure 1 is a perspective view of an injected molded article;

Figure 2 is a top plan view thereof; and

Figure 3 is a side cross-section view taken along line 3-3 of Figure 2.

## Detailed Description

This invention involves injection molding a modified polyester using a heated mold, to partially crystallize the injection molded parts prior to removal from the mold.

One advantage of the present invention is that it results in a one-step procedure wherein the molten resin is injection molded and is subsequently partially crystallized within the heated mold.

It has been unexpectedly found that injection molding of the composition of the present invention in a hot mold results in a process wherein there is the absence of sticking of the resulting article to the mold.

Another advantage of the present invention that the use of a polyolefin/polyester composition lowers the power requirements to the screw. Another advantage is easier mold fill as opposed to processing PET. Another advantage is that the use of a polyolefin in PET leads to an increase in the impact strength of the partially crystalline samples.

In order to produce articles or containers usable in applications where high service temperatures are encountered, a polyester in the crystalline state rather than the amorphous state is necessary. Of the known thermoplastic, crystallizable polyesters,

4

polyethylene terephthalate offers the desirable properties of good high temperature dimensional stability, chemical, oil and solvent resistance and the ability to withstand microwave radiation without absorbing or reflecting it. These properties make it the polymer of choice for use in high temperature food containers.

The polyester useful in forming the injected molded article prepared in accordance with the process constituting the present invention is polyethylene terephthalate. The preparation of polyethylene terephthalate (hereinafter referred to as PET) can be prepared by the reaction of either terephthalic acid or its lower alkyl ester, dimethyl terephthalate, with ethylene glycol and the resultant glycol ester polymerized to high molecular weight product. As used herein the term "high molecular weight" means a polyester having an intrinsic viscosity (IV) ranging from about 0.5 to about 1.10 and preferably from about 0.70 to about 1.0 as measured in a 60/40 by volume mixed solvent of phenol/tetrachloroethane at 30°C.

Since a partially crystalline finished article is necessary for good dimensional stability at high temperature, knowledge of the degree of crystallinity or percent of crystallinity is of considerable importance. Density is a convenient method of measuring percent of crystallinity since there is a direct relationship between the two for a given polyester composition. A calibrated gradient column is used for determining density at a particular temperature. The density value is converted to a percent of crystallinity.

As used throughout this specification and the appended claims the term "glass transition temperature" means that temperature or temperature range at which a change in slope appears in the volume versus temperature curve for said polymer and defining a temperature region below which the polymer exhibits a glassy characteristic and above which the polymer exhibits a rubbery characteristic. The term "crystallization temperature" means that temperature or temperature range in which a regularly repeating morphology, brought about by a combination of molecular mobility and secondary bonding forces, is induced in the polymer over a molecular distance of at least several hundred angstroms.

The polyolefin which is to be homogeneously blended with PET is produced from olefin monomers having from 2 to 6 carbon atoms. Various polyolefins can be used in accordance with the present invention such as linear low density polyethylene, low density polyethylene, high density polyethylene, polypropylene, polyisopropylene, polybutene, polypentene and poly-4-methyl pentene with linear low density being the most preferred.

The blending of the polyethylene terephthalate and the polyolefin can be accomplished by many known methods such as before, during or after the polycondensation of the polyester from the usual monomeric reactants. The polyolefin employed should have a molecular weight of at least 100,000 and have a second order transition point which is distinct from the second order transition point of the polyester. Generally, the second order transition point of the polyolefin should correspond to a temperature of from minus 70°C. to plus 20°C.

The polyolefin can be added to the monomeric dicarboxylic acid or diol reactants prior to the production of the polyester, such as by admixing a finely divided polyolefin with the dimethyl ester of terephthalic acid and subsequently transesterifying and polycondensing with ethylene glycol. Another method is to add the polyolefin to a granulated polyester product. In order to achieve a substantially homogeneous product with uniform improved properties one should blend the two components under conditions of intensive mixing. Preferably the mixing or blending of the two components should be only after first decreasing the water content of the polymers, preferably below .01% by weight of water. Also, it is suggested that contact of the molten polymers with atmospheric oxygen be avoided.

The article made from the polyester-polyolefin blend of the present invention should have from at least .5 to no more than 10% by weight of polyolefin with the corresponding 99.5 to 90% PET. Preferably from 2 to 5% by weight of polyolefin and most preferred 3% by weight of polyolefin.

One may add heat stabilizers to the polyester-polyolefin used in accordance with the present invention. Examples of known stabilizers for use in polyester compositions are disclosed in U.S. Patent 3,987,004, U.S. Patent 3,644,482, and U.S. Patent 3,904,578 herein incorporated by reference. Specific examples of known stabilizers are alkylated phenols, polyphenols, alkylphosphites, arylphosphites, aromatic amines and aromatic polyamines. Preferably polyphenols are used, for example tetrakis(methylene 3-(3,5-ditertiary butyl-4-hydroxylphenyl)-propionate) methane and 1,3,5-trimethyl-2,4,6-tris(3,5-di-tertiary butyl-4-hydroxybenzyl)benzene.

With regard to the level of heat stabilizer added, the amount may range from about .05 to about 2 percent by weight of the total weight of the composition. The particular level used is left to the discretion of the practitioner in light of factors such as degree of protection required, the severity of heat exposure, and any solubility limitation of the chosen heat stabilizer in the polyethylene terephthalate/polyolefin blend being utilized.

Depending on the eventual use of the article comprised of the polyester-polyolefin blend, additives such as dyes, slip agents or fillers may be used, the amounts thereof depending on the particular characteristic desired.

In using the polyester-polyolefin composition in the process of the present invention, it is possible to use any of the known process steps and variations of the injection molding process as long as the mold is maintained at a temperature ranging from 134°C. to 168°C. Preferably a heated nozzle is employed in order to more easily handle the molten polymer mixture. The advantage of using a hot mold in this temperature range is that it results in ease of processing in the absence of sticking of the article to the sides of the mold.

As a result of the use of a mold temperature of from 134°C. to 168°C., the molded article comprising a polyester-polyolefin blend is partially crystallized. Under these conditions, a crystallinity ranging from about 10 to 30 percent will be developed in the polyester-polyolefin blend comprising the article. This degree of crystallinity was found to provide low shrinkage and impact strength.

After the injection molded article has been produced, the molded article does not have to be cooled and subsequently subjected to a heat treatment at elevated temperatures which lies within or above the second order transition range of the polyester. The advantage of this invention results in shorter processing time, thus eliminating the subsequent heat

8

set stage. Due to the partial crystallization within the mold no further shrinkage occurs during subsequent heating even though the temperature is raised above the second order transition range. The duration of the injection molding cycle time will vary depending upon the particular temperature employed and the amount of the weight percentages of the composition injected.

As used throughout this specification and appended claims, all pressures are described in kilopascals (hereinafter kPa).

The following examples are supplied in order to illustrate, but not necessarily to limit, the scope of the present invention. All parts are based on parts by weight unless specifically stated otherwise. All intrinsic viscosity numbers were measured in a 60/40 phenol/tetrachloroethane mixed solvent at 30°C.

For purposes of presentation the various samples have been assigned the following letter codes:

A    a 3% by weight of linear low density polyethylene and 97% by weight of PET having an IV of 1.04. The compound was formed using a masterbatch consisting of 23% by weight of linear low density polyethylene, 7.7% by weight of PET having an IV of 1.04 and .77% by weight of Ethanox 330 (produced by Ethyl Corporation).

B    PET having an IV of 1.04.

C    PET having an IV of .72.

D    a 3% by weight of polypropylene and 97% by weight of PET having an IV of .72. The compound was formed using a masterbatch consisting of 23% by weight of polypropylene, 77% by weight of PET having an IV of .72 and .77% by weight of Ethanox 330.

E    a 3% by weight of polypropylene and 97% by weight of PET having an IV of 1.04. The compound was formed by mechanically mixing the compound such that a 3% by weight polypropylene/97% by weight PET (IV 1.04) compound is homogeneously blended.

F   a 3% by weight of polypropylene and 97% by weight of PET having an IV of 1.04. The compound was formed by using a masterbatch of 23% by weight of polypropylene, 77% by weight of PET having an IV of 1.04 and .77% by weight of Ethanox 330.

G   3% by weight of linear low density polyethylene and 97% by weight of PET having an IV of 1.04. The compound was formed by directing the appropriate amounts of 3 parts by weight of linear low density polyethylene and 97 parts by weight of PET having an IV of 1.04. This mixture was mechanically mixed such that the 3%/97% compound was homogeneously blended.

H   3% by weight of linear low density polyethylene and 97% by weight of PET having an IV of 1.04. The compound was formed by directly adding the appropriate amounts of polyethylene to the polycondensation reaction during the formation of the PET to yield a 3% by weight polyethylene/97% PET compound.

I.  23% by weight of linear low density polyethylene, 77% by weight of PET having an IV of 1.04 and .77% by weight of Ethane 330. The compound was formed by mechanical blend during extrusion.

J.  3% linear low density polyethylene/97% PET having an IV=.72. Compound made from 23% by weight linear low density polyethylene/PET (IV-1.04) masterbatch with .77% by weight of Ethanox 330.

K.  5% linear low density polyethylene/95% PET having an IV=.72. Compound made from 23% by weight linear low density/PET (IV-1.04) masterbatch having .77% by weight of Ethanox 330.

L. 10% by weight of linear low density polyethylene and 90% by weight of PET having an IV of .72. The compound was formed by using a masterbatch of 23% by weight of linear low density polyethylene/PET (IV-1.04) masterbatch having .77% by weight of Ethanox 330.

M. 1% by weight of linear low density polyethylene and 99% by weight of PET having an IV of 1.04. The compound was formed by using a masterbatch of 23% by weight of linear low density polyethylene/PET (IV-1.04) masterbatch having .77% by weight of Ethanox 330.

N. 10% by weight of linear low density polyethylene and 90% by weight of PET having an IV of 1.04. The compound was formed by using a masterbatch of 23% by weight of linear low density polyethylene/ PET (IV-1.04) masterbatch having .77% by weight of Ethanox 330.

O. 5% by weight of linear low density polyethylene and 95% by weight of PET having an IV of 1.04. The compound was formed by using a masterbatch of 23% by weight of linear low density polyethylene/ PET (IV=1.04) masterbatch having .77% by weight of Ethanox 330.

P 1% by weight of linear low density polyethylene and 99% by weight of PET having an I.V. of .72. The compound was formed by using a masterbatch of 23% by weight of linear low density polyethylene/PET (I.V.-1.04) masterbatch having .77% by weight of Ethanox 330.

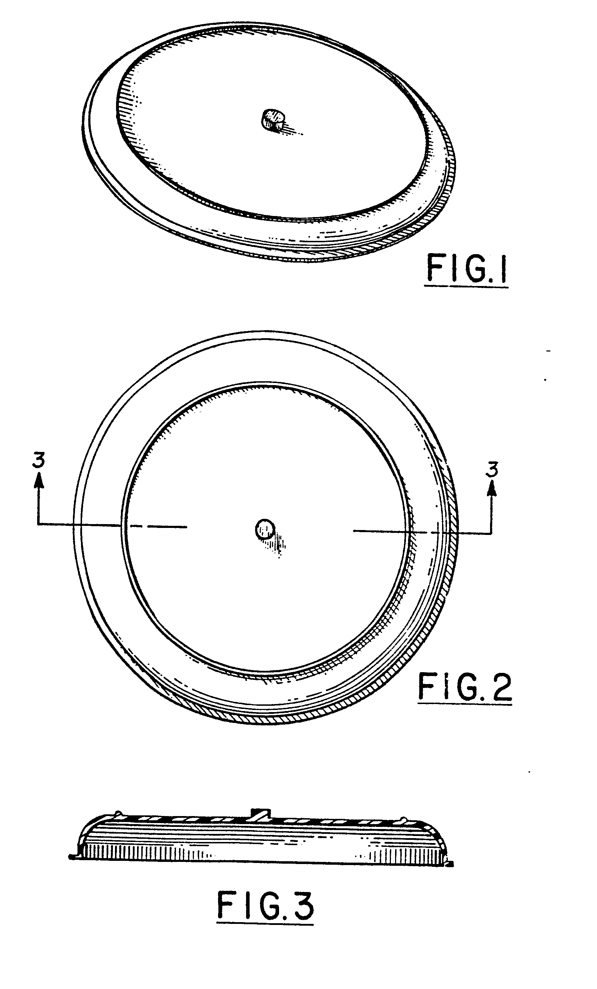

The following examples were conducted on 75-ton Van Dorn injection molding machine utilizing a 6 ounce barrel. A Van Dorn 108V mold base was adapted by modifying and installing a D. M. E. cavity retainer set with corresponding male insert in order to injection mold a 7 inch diameter by 1/2 inch deep plate (nominal 40 mils thick). A cold runner system was utilized. Final profile of the dish is given in Figure 1. The mold cavity was chrome plated. Each mold half base was electrically heated using CALROD heaters and thermally controlled with a thermocouple.

The compounds were originally in pellet form.

Examples 1-3

Utilizing a PET (I.V. .72), three levels of LLDPE (3%, 5%, 10%) were evaluated. See Table I for operating conditions.

At the 10% level, the injection molded article had a definite tendency of sticking to the hot mold and delamination upon ejection from the hot mold. At the 3% and 5% mold fill was essentially comparable.

Examples 4-7 and 33

Utilizing a PET (1.04) five levels of LLDPE (1%, 3%, 5%, 10%, 23%) were evaluated. See Table I for operating conditions.

At 10% and 23% the injection molded article had a definite tendency of sticking to the hot mold surface and delaminating upon ejection from the mold. At the 1% level, mold fill was more difficult in comparison to the higher levels. The inclusion of LLDPE up to five percent had no significant improvement on molding operation. It was judged that 3% is optimum.

Examples 8-12

A series of experiments were conducted to evaluate the processing (injection molding) aspects of a particular composition having three weight percent linear low density polyethylene with 97% PET whose starting IV was 1.04. The cycle times and mold temperatures were varied to assess the effects on the part quality. See Table I for operating conditions.

The experimental results showed that the rate of crystallization is time and temperature dependent. It is noted that at a (Example 8) mold temperature of 160°C. and cycle time of 60 seconds, the part demonstrated excellent rigidity upon demolding, and high surface quality with no sticking. The part did not distort as it cooled and upon insertion in an oven at 200°C. did not lose its configuration.

At the same mold temperature of 160°C. but at a cycle time of 30 seconds (Example 9), a good quality part was obtained and no sticking; however, the thicker sprue was not solidified. This example demonstrated shorter cycle time feasibility, if a hot runner system is be utilized.

At lower mold temperatures, i.e. 137°C. and cycle time of 60 seconds (Example 10) a satisfactory part was obtained with no sticking.

At the same mold temperature of 137°C., but at a cycle time of 30 seconds (Example 11) the part was slightly rubbery and not sufficiently crystallized (upon demolding) to be permanently set. The part did not stick to the mold.

No distinctions were found between Examples 10 and 12.

Examples 13-18

The effect of processing unmodified high molecular weight PET (I.V. 1.04) (no polyolefin additive) was investigated by conducting another series of injection molding trials. The cycle times and mold temperatures were varied to evaluate the effects on part quality, distortion, and sticking. See Table I for operating conditions.

13

The results showed that unmodified PET required a delicate balance between mold temperatures and cycle times. .It was quite evident that longer cycle times (mold temperature 137°C.) were required to achieve the same levels of crystallinity to avoid part distortion upon demolding. At a higher mold temperature (160°C.) the part had a tendency of sticking and would also require a longer cycle time to achieve the same level of rigidity of the part upon demolding.

Examples 19-26

The effect of processing unmodified PET (I.V. .72) (no polyolefin additives) was investigated by conducting another series of injection molding trials. Again cycle times and mold temperatures were varied to evaluate the effects on part quality, distortion and sticking. See Table I for operating conditions.

The results of the trials showed that unmodified, lower molecular weight PET required a delicate balance between mold temperature and cycle time. It was quite evidence that longer cycle times (mold temperature 137°C.) were required to achieve the same levels of crystallinity to avoid part distortion upon demolding. At the higher mold temperature (160°C.) the part had a tendency of sticking and would also require a longer cycle time to achieve the same level of rigidity of the part upon demolding.

Examples 27-29

The effect of adding polypropylene to PET was investigated by conducting a series of experiments looking at part quality. See Table I for oeprating conditions. In each case the part did not stick to the mold, exhibited excellent surface characteristics, and did not deform upon demolding.

Examples 30-33

Alternative methods of incorporating the polyolefin modifier were evaluated by preparing compositions whose final composition is 3% LLDPE with 97% PET. One sample (Examples 30-31) was formulated by direct mechanical mixing of the 3%/97% compound homogeneously blended. The other composition was formed directly in the reactor by adding the appropriate amounts of polyethylene to the polycondensation during the formulation of the PET to yield a 3% by weight polyethylene/97% PET compound.

As was seen from the injection molded parts, the mechanical mixture of PE/PET yielded a slight degree of variability in the plates likely due to insufficient melt mixing in the extruder. However, the parts processed successfully (no mold sticking or distortion). The material made in the reactor did not indicate any processing differences than in Example 5. See Table I for operating conditions.

15

TABLE I

| EXAMPLE NO. | | 1 | 2 | 3 | 4 |
|---|---|---|---|---|---|
| COMPOUND | | J | K | L | M |
| Cylinder Temp (°C) | Rear | 282 | 282 | 282 | 293 |
| | Center | 293 | 293 | 293 | 304 |
| | Front | 293 | 293 | 293 | 304 |
| Nozzle Temp (°C) | | 298 | 298 | 298 | 304 |
| Mold Temp (°C) | | 160 | 160 | 160 | 160 |
| Cycle Time (Seconds) | Injec. Forward | 20 | 20 | 20 | 20 |
| | Mold Shut | 40 | 40 | 40 | 40 |
| Back pressure (kPa) | | 517.125 | 517.125 | 517.125 | 517.125 |
| Screw RPM | | 60 | 60 | 60 | 60 |
| Molding pressure (kPa) | | 4826.5 | 4826.5 | 6895 | 6895 |
| Current (Amps) | | 4.6 | 4.6 | 4.6 | 4.6 |

16

TABLE I Continued

| EXAMPLE NO. | | 5 | 6 | 7 | 8 |
|---|---|---|---|---|---|
| COMPOUND | | A | O | N | A |
| Cylinder Temp (°C) | Rear | 293 | 293 | 293 | 293 |
| | Center | 304 | 304 | 304 | 304 |
| | Front | 304 | 304 | 304 | 304 |
| Nozzle Temp (°C) | | 304 | 304 | 304 | 304 |
| Mold Temp (°C) | | 160 | 160 | 160 | 160 |
| Cycle Time (Seconds) | Injec. Forward | 20 | 20 | 20 | 20 |
| | Mold Shut | 40 | 40 | 40 | 40 |
| Back pressure (kPa) | | 517.125 | 517.125 | 517.125 | 517.125 |
| Screw RPM | | 60 | 60 | 60 | 60 |
| Molding pressure (kPa) | | 6895 | 6895 | 9653 | 8274 |
| Current (Amps) | | 4.6 | 4.6 | 4.6 | 4.4 |

17

TABLE I continued

| EXAMPLE NO. | | 9 | 10 | 11 | 12 |
|---|---|---|---|---|---|
| COMPOUND | | A | A | A | A |
| Cylinder | Rear | 293 | 293 | 293 | 293 |
| Temp (°C) | Center | 304 | 304 | 304 | 304 |
| | Front | 304 | 304 | 304 | 304 |
| Nozzle Temp (°C) | | 304 | 304 | 304 | 304 |
| Mold Temp (°C) | | 160 | 137 | 137 | 137 |
| Cycle Time (Seconds) | Injec. Forward | 15 | 20 | 15 | 15 |
| | Mold Shut | 15 | 40 | 15 | 40 |
| Back pressure (kPa) | | 517.125 | 517.125 | 517.125 | 517.125 |
| Screw RPM | | 60 | 60 | 60 | 60 |
| Molding pressure (kPa) | | 8274 | 8274 | 8274 | 8274 |
| Current (Amps) | | 4.4 | 4.4 | 4.4 | 4.4 |

18

TABLE I continued

| EXAMPLE NO. | | 13 | 14 | 15 | 16 |
|---|---|---|---|---|---|
| COMPOUND | | B | B | B | B |
| Cylinder Temp (°C) | Rear | 293 | 293 | 293 | 293 |
| | Center | 304 | 304 | 304 | 304 |
| | Front | 304 | 304 | 304 | 304 |
| Nozzle Temp (°C) | | 304 | 304 | 304 | 304 |
| Mold Temp (°C) | | 160 | 160 | 137 | 137 |
| Cycle Time (Seconds) | Injec. Forward | 15 | 20 | 20 | 20 |
| | Mold Shut | 15 | 40 | 40 | 60 |
| Back pressure (kPa) | | 517.125 | 517.125 | 517.125 | 517.125 |
| Screw RPM | | 60 | 60 | 60 | 60 |
| Molding pressure (kPa) | | 8274 | 8274 | 8274 | 8274 |
| Current (Amps) | | 4.4 | 4.4 | 4.4 | 4.4 |

TABLE I continued

| EXAMPLE NO. | | 17 | 18 | 19 | 20 |
|---|---|---|---|---|---|
| COMPOUND | | B | B | C | C |
| Cylinder Temp (°C) | Rear | 293 | 293 | 282 | 282 |
| | Center | 304 | 304 | 293 | 293 |
| | Front | 304 | 304 | 293 | 293 |
| Nozzle Temp (°C) | | 304 | 304 | 293 | 293 |
| Mold Temp (°C) | | 137 | 137 | 160 | 160 |
| Cycle Time (Seconds) | Injec. Forward | 20 | 20 | 20 | 20 |
| | Mold Shut | 80 | 100 | 40 | 60 |
| Back pressure (kPa) | | 517.125 | 517.125 | 517.125 | 517.125 |
| Screw RPM | | 60 | 60 | 60 | 60 |
| Molding pressure (kPa) | | 8274 | 8274 | 6205.5 | 6205.5 |
| Current (Amps) | | 4.4 | 4.4 | 4.2 | 4.2 |

| EXAMPLE NO. | | 21 | 22 | 23 | 24 |
|---|---|---|---|---|---|
| COMPOUND | | C | C | C | C |
| Cylinder | Rear | 282 | 282 | 282 | 282 |
| Temp (°C) | Center | 293 | 293 | 293 | 293 |
| | Front | 293 | 293 | 293 | 293 |
| Nozzle Temp (°C) | | 293 | 293 | 293 | 293 |
| Mold Temp (°C) | | 160 | 137 | 137 | 137 |
| Cycle | Injec. | | | | |
| Time | Forward | 20 | 20 | 20 | 20 |
| (Sec- | Mold | | | | |
| onds) | Shut | 80 | 40 | 60 | 80 |
| Back pressure (kPa) | | 517.125 | 517.125 | 517.125 | 517.125 |
| Screw RPM | | 60 | 60 | 60 | 60 |
| Molding pressure (kPa) | | 6205.5 | 6205.5 | 6205.5 | 6205.5 |
| Current (Amps) | | 4.2 | 4.2 | 4.2 | 4.2 |

## TABLE I continued

| EXAMPLE NO. | | 25 | 26 | 27 | 28 |
|---|---|---|---|---|---|
| COMPOUND | | C | C | D | E |
| Cylinder Temp (°C) | Rear | 282 | 282 | 282 | 293 |
| | Center | 293 | 293 | 293 | 304 |
| | Front | 293 | 293 | 293 | 304 |
| Nozzle Temp (°C) | | 293 | 293 | 293 | 304 |
| Mold Temp (°C) | | 137 | 137 | 160 | 160 |
| Cycle Time (Seconds) | Injec. Forward | 20 | 20 | 20 | 20 |
| | Mold Shut | 100 | 120 | 40 | 40 |
| Back pressure (kPa) | | 517.125 | 517.125 | 517.125 | 517.125 |
| Screw RPM | | 60 | 60 | 60 | 60 |
| Molding pressure (kPa) | | 6205.5 | 6205.5 | 6205.5 | 5516 |
| Current (Amps) | | 4.2 | 4.2 | 4.2 | 4.6 |

22

TABLE I continued

| EXAMPLE NO. | | 29 | 30 | 31 | 32 | 33 |
|---|---|---|---|---|---|---|
| COMPOUND | | F | G | G | H | I |
| Cylinder Temp (°C) | Rear | 293 | 293 | 293 | 293 | 293 |
| | Center | 304 | 304 | 304 | 304 | 304 |
| | Front | 304 | 304 | 304 | 304 | 304 |
| Nozzle Temp (°C | | 304 | 304 | 304 | 304 | 304 |
| Mold Temp (°C) | | 160 | 160 | 160 | 160 | 160 |
| Cycle Time (Seconds) | Injec. Forward | 20 | 20 | 15 | 20 | 20 |
| | Mold Shut | 40 | 40 | 15 | 40 | 40 |
| Back pressure (kPa) | | 517.125 | 517.125 | 517.125 | 517.125 | 517.125 |
| Screw RPM | | 60 | 60 | 60 | 60 | 60 |
| Molding pressure (kPa) | | 6895 | 6895 | 6895 | 8963.5 | 3447.5 |
| Current (Amps) | | 4.6 | 4.6 | 4.6 | 4.5 | 4.2 |

Examples 34-41

For comparative purposes amorphous articles were made from both high IV PET resin (IV=1.04) and low IV PET resin (IV=.72) each modified using a 23% linear low density polyethylene/PET masterbatch containing .77% by weight of Ethanox 330 resulting in a 1%, 3% and 10% linear low density polyethylene/PET mixture.

The injection moldings were conducted using a 75-ton Van Dorn 6 ounce barrel and the ASTM test cluster mold cavity. To assure dispersion, all samples were molded from the corresponding polyester blended with an appropriate amount of a masterbatch.

See Table II for operating conditions.

24

TABLE II

| EXAMPLE NO. | | 34 | 35 | 36 | 37 |
|---|---|---|---|---|---|
| COMPOUND | | A | P | J | L |
| Cylinder | Rear | 271 | 271 | 271 | 271 |
| Temp (°C) | Center | 282 | 282 | 282 | 282 |
| | Front | 282 | 282 | 282 | 282 |
| Nozzle Temp (°C) | | 282 | 282 | 282 | 282 |
| Mold Temp (°C) | | 21 | 21 | 21 | 21 |
| Cycle | Injec. | | | | |
| Time | Forward | 20 | 20 | 20 | 20 |
| (Sec- | Mold | | | | |
| onds) | Shut | 20 | 20 | 20 | 20 |
| Back pressure (kPa) | | 172.37 | 172.37 | 172.37 | 172.37 |
| Screw RPM | | 60 | 60 | 60 | 60 |
| Molding pressure (kPa) | | 8274 | 8274 | 8274 | 8274 |
| Current (Amps) | | 4.8 | 4.6 | 4.6 | 4.4 |

## TABLE II continued

| EXAMPLE NO. | | 38 | 39 | 40 | 41 |
|---|---|---|---|---|---|
| COMPOUND | | B | M | A | N |
| Cylinder | Rear | 293 | 293 | 293 | 293 |
| Temp (°C) | Center | 304 | 304 | 304 | 304 |
| | Front | 304 | 304 | 304 | 304 |
| Nozzle Temp (°C) | | 310 | 310 | 310 | 310 |
| Mold Temp (°C) | | 21 | 21 | 21 | 21 |
| Cycle Time (Seconds) | Injec. Forward | 20 | 20 | 20 | 20 |
| | Mold Shut | 20 | 20 | 20 | 20 |
| Back pressure (kPa) | | 172.37 | 172.37 | 172.37 | 172.37 |
| Screw RPM | | 60 | 60 | 60 | 60 |
| Molding pressure (kPa) | | 10342.5 | 10342.5 | 10342.5 | 10342.5 |
| Current (Amps) | | 5.0 | 4.8 | 4.8 | 4.6 |

Example 42

As apparent from Table II, a cold mold was used to obtain amorphous samples. The amorphous samples from Examples 34-41 were placed in a hot air oven at various temperatures (200°C., 175°C. and 120°C.) for a period of 15 minutes. All amorphous samples resulted in distortion before subsequently being crystallized.

Examples 43-44

As apparent from Table III, a cold mold was used to obtain amorphous plate samples (Figs. 1-3). These plates were successfully injection molded at mold temperatures of 43°C. to 51°C. The molding pressure however was overridden with the boost pressure of 1800 kPa in order to fill the mold. This difficulty (mold fill) was not experienced using a hot mold. Typical total cycle times of 40 seconds and 20 seconds yielded amorphous parts.

To evaluate heat distortion characteristics of these plates, amorphous plates were placed in a hot air oven (empty) at various temperatures (200°C., 175°C. and 120°C.) for a period of 15 minutes. All amorphous samples distorted before subsequently being crystallized.

## TABLE III

| EXAMPLE NO. | | 43 | 44 |
|---|---|---|---|
| COMPOUND | | A | A |
| Cylinder Temp (°C) | Rear | 293 | 293 |
| | Center | 310 | 310 |
| | Front | 310 | 310 |
| Nozzle Temp (°C) | | 310 | 310 |
| Mold Temp (°C) | | 44 | 44 |
| Cycle Time (Seconds) | Injec. Forward | 20 | 5 |
| | Mold Shut | 20 | 15 |
| Back pressure (kPa) | | 517.125 | 517.125 |
| Screw RPM | | 60 | 60 |
| Molding pressure (kPa) | | 12411 | 12411 |
| Current (Amps) | | 4.8 | 4.8 |

28

Examples 44-50

Injection molded articles (Figs. 1-3) made in the similar manner as Examples 1 through 7 were placed in a hot oven at various temperatures (200°C., 175°C. and 120°C.) for a period of 15 minutes. These crystalline parts, both empty and containing 12 ounces of weight, were placed in the oven and exhibited no distortion in or during removal from the oven.

The physical properties of the injected molten plates of Examples 1-7 are listed below in Table IV.

TABLE IV

PHYSICAL PROPERTIES OF HEAT SET INJECTION MOLDED PLATES (Fig. 1)

| Property | Units | Example 1 | Example 2 | Example 3 | Example 4 | Example 5 | Example 6 | Example 7 |
|---|---|---|---|---|---|---|---|---|
| I.V. | | 0.62 | 0.65 | 0.66 | 0.67 | 0.65 | 0.64 | 0.66 |
| Density | g/cc | 1.347 | 1.313 | 1.298 | 1.259 | 1.334 | 1.312 | 1.297 |
| Room Temp | | | | | | | | |
| Tensile Yield | kPa | 62744.5 | 57228.5 | 53091.5 | 59986.5 | 60676 | 57918 | 52402 |
| Yield Elong | % | 11 | 10 | 10 | 10 | 12 | 10 | 10 |
| Temp 100°C. | | | | | | | | |
| Tensile Yield | kPa | 20685 | 18616.5 | | 2275 | 20685 | 19306 | |
| Yield Elong | % | 25 | 35 | | 25 | 30 | 35 | |

29

0104131

CLAIMS

1. A process for making an injection molded article comprising injection molding a molten composition into a mold wherein said mold is at a temperature of from 134°C. to 168°C., wherein said molten composition has distributed therein from .5% to 10% by weight of a finely divided polyolefin produced from olefin monomers having 2 to 6 carbon atoms and 99.5% to 90% by weight of polyethylene terephthalate.

2. A process of Claim 1 wherein the polyolefin is selected from the group comprising linear low density polyethylene, low density polyethylene, high density polyethylene, polypropylene, polyisopropylene, polybutene, polypentene and poly-4-methyl pentene.

3. A process of Claim 1 wherein the mold temperature is from 155°C. to 165°C.

4. A process of Claim 1 wherein the molten composition comprises from 3% to 5% by weight of a finely distributed polyolefin.

5. A process for making an injection molded article comprising injection molding a molten composition into a mold wherein said mold is at a temperature of from 134°C. to 168°C., wherein said molten composition has distributed therein .5 to 10% by weight of a finely divided polyolefin produced from olefin monomers having 2 to 6 carbon atom monolefins, 99.5 to 90% by weight of polyethylene therephthalate and from .05 to 2% by weight of an antioxidant.

6. A process of Claim 5 wherein said antioxidant is 1,3,5 -trimethyl-2,4,6-tris(3,5-di-tertiary butyl-4-hydroxybenzyl) benzene.

7. An molded article prepared by a process comprising injection molding a molten composition into a mold wherein said mold is at a temperature of from 134°C. to 168°C., wherein said molten composition has distributed therein from .05% to 10% by weight of a finely divided polyolefin produced from olefin monomers having 2 to 6 carbon atoms monoolefins and 99.5 to 90% by weight of polyethylene terephthalate.

8. A molded article prepared by a process comprising injection molding a molten composition into a mold wherein said mold is at a temperature of from 134°C. to 168°C. wherein said molten composition has distributed therein from .5% to 10% by weight of a finely divided polyolefin produced from olefin monomers having 2 to 6 carbon atoms monoolefins, 99.5 to 90% by weight of polyethylene terephthalate and .05% to 2% by weight of an antioxidant.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 148 000 (CHEMISCHE WERKE HÜLS) <br> * Claims 1,2; page 4, lines 16-35; examples 1-30 * | 1,2,4, 7 | C 08 L 67/02 |
| Y | | 5,6,8 | |
| | --- | | |
| D,Y | US-A-3 987 004 (PAUL C. GEORGOUDIS) <br> * Abstract; page 2, column 4 * | 5,6,8 | |
| | ----- | | |
| | | | **TECHNICAL FIELDS SEARCHED (Int. Cl ³)** |
| | | | C 08 L |

The present search report has been drawn up for all claims

| Place of search THE HAGUE | Date of completion of the search 25-11-1983 | Examiner DECOCKER L. |
|---|---|---|